# EUROPÄISCHE PATENTANMELDUNG

(11) **EP 0 546 253 A1**
(43) Veröffentlichungstag der Anmeldung: **16.06.1993**
(21) Anmeldenummer: 92112324.6
(22) Anmeldetag: 18.07.1992
(51) Int. Cl.: B60R 11/02

(54) **Haltevorrichtung zur lösbaren Aufnahme eines quaderförmigen Funkgerätes**

(30) Priorität: 10.12.1991 DE 4140635
(71) Anmelder: ROBERT BOSCH GMBH, 70442 Stuttgart (DE)
(72) Erfinder: Birkl, Gérard-Emile, Dipl.-Ing., W-1000 Berlin 44 (DE); Dürbeck, Horst Peter, W-1000 Berlin 33 (DE); Lee, Dennis, Ing., W-1000 Berlin 22 (DE)

(57) **Zusammenfassung**

2.1 Eine bekannte Haltevorrichtung für ein tragbares Funktelefon hat einen verhältnismäßig komplizierten Aufbau, der vereinfacht werden soll, ohne daß sich dadurch die Bedienbarkeit verschlechtert.

2.2 Die vorliegende Haltevorrichtung weist an einem Endbereich (14) einen Vorsprung (15) auf, der in eine seitliche Vertiefung (16) am Funkgerät (11) paßt. Mit dem anderen Endbereich (17) der Haltevorrichtung (10) ist ein elastisches Band (21) verbunden, dessen freies Ende auf die obere Oberfläche (27) des Funkgerätes drückt und damit das Funkgerät betriebssicher festhält.

2.3 Eine bevorzugte Anwendung für die Haltevorrichtung ist ein tragbares Funktelefon, das in einem Kofferraum eines Kraftfahrzeuges untergebracht werden soll.

3. Die Figur zeigt eine Haltevorrichtung mit darauf befestigtem Funkgerät.

## Beschreibung

Die Erfindung geht von einer Haltevorrichtung nach dem Oberbegriff des Anspruchs 1 aus.

Es ist eine Haltevorrichtung bekannt (Druckschrift Siemens Mobiltelefon C2, Impressum: 941003 WS 05 89 150), die als sogenannte Autohalterung für ein portables Mobiltelefon vorgesehen ist. Dabei ist die Autohalterung im Kofferraum eines Kraftfahrzeuges mittels Schrauben befestigt, und das Funkgerät wird in der Autohalterung rastend festgehalten. Diese Autohalterung erfüllt zwar ihren Zweck, sie hat jedoch den Nachteil eines verhältnismäßig komplizierten Aufbaus.

Der Erfindung liegt die Aufgabe zugrunde, eine Haltevorrichtung nach dem Oberbegriff des Anspruchs 1 derart weiterzubilden, daß die Haltevorrichtung einen verhältnismäßig einfachen Aufbau hat, mit einfachen mechanischen Arretiermitteln auskommt und für den Benutzer in einfacher Weise bedienbar ist.

Diese Aufgabe wird durch die in dem Anspruch 1 angegebenen Merkmale gelöst. Damit ist der Vorteil verbunden, daß die Haltevorrichtung einfach herstellbar und bedienbar ist. Eine bevorzugte Anwendung für die erfindungsgemäße Haltevorrichtung ist ein tragbares Funktelefon, das an einer geeigneten Stelle in einem Fahrzeug, vorzugsweise im Kofferraum eines Kraftfahrzeuges, betriebssicher untergebracht werden kann.

Ein Ausführungsbeispiel der Erfindung ist in der Zeichnung an Hand mehrerer Figuren dargestellt und wird im folgenden näher erläutert. Es zeigen
Fig. 1 eine Ansicht einer erfindungsgemäßen Haltevorrichtung mit eingesetztem Funkgerät,
Fig. 2 eine Seitenansicht zu Fig. 1,
Fig. 3 eine Ansicht der Haltevorrichtung ohne Funkgerät und
Fig. 4 eine Draufsicht einer Haltevorrichtung nach Fig. 3.

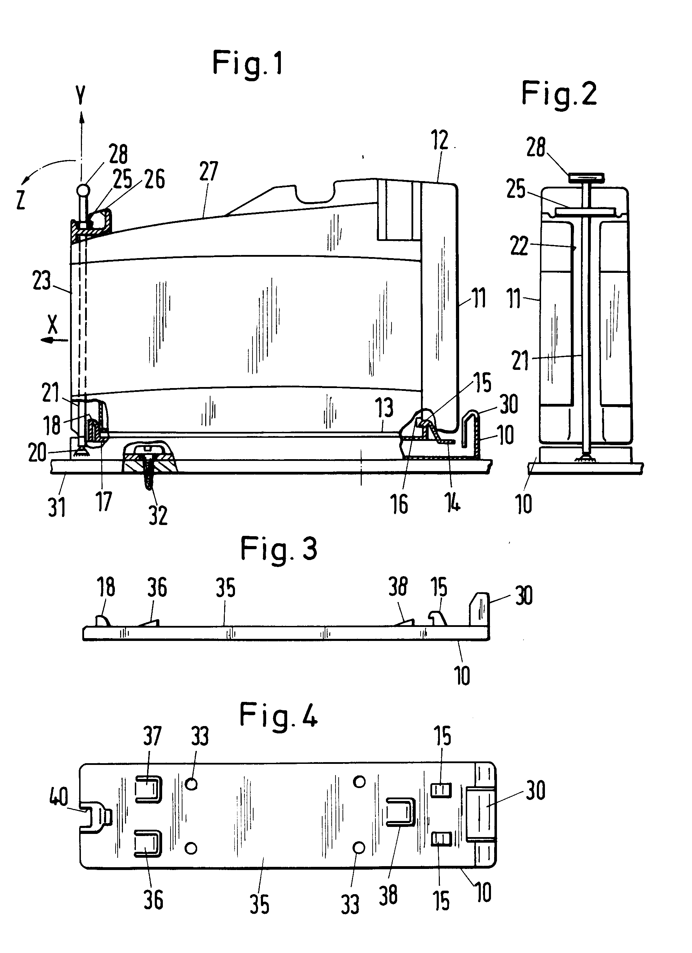

In den Fig. 1 und 2 bezeichnet 10 eine Haltevorrichtung für ein Funkgerät 11, das ist vorzugsweise ein tragbares Funktelefon mit etwa quaderförmigem Gehäuse 12. Die Haltevorrichtung 10 ist in ihren Abmessungen der Auflagefläche 13 des vorzugsweise aufrecht stehenden Funkgerätes 11 angepaßt und weist an einem Endbereich 14 zwei Vorsprünge 15 auf, die in seitliche Vertiefungen 16 des Funkgerätes 11 eingreifen. Eine am anderen Endbereich 17 der Haltevorrichtung 10 vorgesehene Erhebung 18 fixiert zusammen mit den Vorsprüngen 15 das Funkgerät in seiner Längsrichtung. Neben der Erhebung 18 befindet sich im äußeren Endbereich 17 eine in Fig. 1 schematisch angedeutete Lagerung 20 für ein elastisches Band 21, das in einer Nut 22 (vgl. Fig. 2) geführt ist und das an seinem der Lagerung 20 abgewandten Ende als T-förmiges Ende 25 ausgebildet ist. Das T-förmige Ende paßt in eine Vertiefung 26 an der Oberseite 27 des Funkgerätegehäuses 12 und geht in einen Griff 28, das ist vorzugsweise ein Knebel, über.

Die Haltevorrichtung 10 hat an dem dem Vorsprung 15 zugewandten Endbereich 14 einen Anschlag 30, der vorzugsweise haarnadelförmig und etwas federnd ausgebildet ist.

Die Haltevorrichtung weist an ihrer Oberseite 35 (vgl. Fig. 3 und 4) aus der Oberfläche vorstehende Zungen 36, 37, 38 auf, die sich an der Auflagefläche 13 des Funkgerätes federnd abstützen und für eine spielfreie Lagerung des Funkgerätes 11 sorgen.

Das Montieren der Haltevorrichtung 10 und das Einsetzen bzw. Herausnehmen des Funkgerätes 11 aus der Haltevorrichtung geht folgendermaßen vor sich.

Die Haltevorrichtung 10 wird auf einer Wand 31, das ist zum Beispiel die Bodenwand des Kofferraumes eines Kraftfahrzeuges, mittels Schrauben 32 befestigt, die durch je eine Öffnung 33 (Fig. 4) der Haltevorrichtung 10 hindurchgesteckt und in entsprechende Öffnungen der Wand 31 eingeschraubt werden. Die Schrauben 32 haben vorzugsweise ein selbstschneidendes Gewinde. In die Haltevorrichtung 10 wird das Funkgerät 11 unter einem spitzen Winkel zu der Ebene der Haltevorrichtung 10 mit seiner seitlichen Vertiefung 16 auf den Vorsprung 15 gesteckt, wobei der Anschlag 30 als Hilfe beim Aufsetzen des Funkgerätes dient, und mit seiner Grundfläche 13 auf die Zungen 36, 37 und 38 gelegt. Anschließend wird das Band 21 am Griff 28 ergriffen, in die Nut 22 eingelegt und durch Ziehen an dem Griff 28 in Pfeilrichtung Y (vgl. Fig. 1) in die Vertiefung 26 hineingehoben. Durch die Elastizität des Bandes 21 zieht dieses sich dann zusammen und hält das Funkgerät 11 in der in Fig. 1 gezeigten Position.

Soll das Funkgerät 11 später aus der Haltevorrichtung 10 herausgenommen werden, so braucht dazu lediglich der Griff 28 in Pfeilrichtung Y gezogen und das Band 21 in Pfeilrichtung Z geschwenkt zu werden. Dann kann die Verbindung zwischen dem Vorsprung 15 und der Vertiefung 16 durch einfaches Schwenken des Funkgerätes um den Vorsprung 15 und durch gleichzeitiges Ziehen in Richtung X aus der Halterung herausgenommen werden.

Das Band 21 kann gegebenenfalls als separates Bauteil in einem Schlitz 40 der Haltevorrichtung 10 eingehängt sein.

## Patentansprüche

1. Haltevorrichtung zur Aufnahme eines quaderförmigen Funkgerätes, die in einem Fahrzeug angeordnet ist und Mittel zum lösbaren Befestigen des Funkgerätes aufweist, dadurch gekennzeichnet, daß die Haltevorrichtung (10) an einem Endbereich (14) einen Vorsprung (15) aufweist, der in eine Vertiefung (16) am Funkgerät (11) paßt, und daß die Haltevorrichtung am gegenüberliegenden Endbereich (17) mit einem zumindest in Längsrichtung elastischen Band (21) verbunden ist, dessen freies Ende sich auf der Oberseite (27) des Funkgerätes (11) abstützt.

2. Haltevorrichtung nach Anspruch 1, dadurch gekennzeichnet, daß das freie Ende des Bandes (21) als T-förmiges Ende (25) ausgebildet ist, das in eine Vertiefung (26) an der Oberseite (27) des Funkgerätes (11) eingreift.

3. Haltevorrichtung nach Anspruch 1 oder 2, dadurch gekennzeichnet, daß das T-förmige Ende (25) des elastischen Bandes (21) in einen Griff (28) übergeht.

4. Haltevorrichtung nach einem der Ansprüche 1 bis 3, dadurch gekennzeichnet, daß das eine Ende des Bandes (21) schwenkbar mit der Haltevorrichtung (10) verbunden ist.

5. Haltevorrichtung nach einem der Ansprüche 1 bis 3, dadurch gekennzeichnet, daß das eine Ende des Bandes (21) lösbar mit der Haltevorrichtung (10) verbunden ist.

6. Haltevorrichtung nach Anspruch 1 oder 2, dadurch gekennzeichnet, daß die Haltevorrichtung (10) in ihren Abmessungen der Grundfläche (13) des Funkgerätes (11) angepaßt ist.

7. Haltevorrichtung nach einem der Ansprüche 1, 2 oder 5, dadurch gekennzeichnet, daß aus der Haltevorrichtung (10) federnde Zungen (36, 38) hervorstehen.

8. Haltevorrichtung nach einem der Ansprüche 1 bis 7, dadurch gekennzeichnet, daß die Haltevorrichtung (10) an dem einen Endbereich (14) einen Anschlag (30) für das Funkgerät (11) aufweist.

9. Haltevorrichtung nach Anspruch 8, dadurch gekennzeichnet, daß der Anschlag (30) in Längsrichtung der Haltevorrichtung (10) federnd ausgebildet ist.

10. Haltevorrichtung nach einem der Ansprüche 1, 6, 7, 8 oder 9, dadurch gekennzeichnet, daß die Haltevorrichtung (10) an dem anderen Endbereich (17) eine Erhebung (18) zum Fixieren des Funkgerätes (11) in dessen Längsrichtung aufweist.
